Europäisches Patentamt

European Patent Office

Office européen des brevets

(11) Numéro de publication: **0 374 335**
**A1**

# (12) DEMANDE DE BREVET EUROPEEN

(21) Numéro de dépôt: **88430033.6**

(51) Int. Cl.5: **B62B 1/10**

(22) Date de dépôt: **21.12.88**

(43) Date de publication de la demande:
**27.06.90 Bulletin 90/26**

(84) Etats contractants désignés:
**BE CH DE ES FR GB IT LI**

(71) Demandeur: **Bernaoui, Taieb**
**"Sablettes Radiateurs" 2416 Corniche**
**Georges Pompidou**
**F-83500 La Seyne sur Mer(FR)**

Demandeur: **Conge, Jean-Louis**
**53 Les Meissonniers**
**F-83260 La Crau(FR)**

(72) Inventeur: **Bernaoui, Taieb**
**2416, Corniche Georges Pompidou**
**F-83500 La Seyne sur Mer(FR)**

(74) Mandataire: **Azais, Henri et al**
**c/o CABINET BEAU DE LOMENIE**
**"Prado-Mermoz" 232, Avenue du Prado**
**F-13008 Marseille(FR)**

(54) **Dispositif de manutention de type "diable" à une roue.**

(57) La présente invention a pour objet un dispositif de manutention de type "diable" à une roue.

Une des applications de l'invention est la manutention par déplacement de charges inférieures à 150 kg, dans des endroits de circulation encombrée.

Le dispositif comporte un plateau dit bavette (1) de prise en charge à même le sol, 2 branches de transport (3) de hauteur à "mains d'homme" et une seule roue médiane (4) située en arrière dudit plateau (1) et disposée de telle façon que le plan tangent à la roue, et passant par l'extrémité (7) du plateau fait un angle compris entre zéro et quelques degrés avec le plan contenant ledit plateau (1).

Fig-1

Xerox Copy Centre

## Dispositif de manutention de type "diable", à une roue.

La présente invention a pour objet un dispositif de manutention de type "diable", à une roue.

Le secteur technique de l'invention est la fabrication de moyens de manutention de petites charges, manoeuvrables par une seule personne.

Une des applications de l'invention est la manutention, pour le déplacement de charge inférieure à 150 Kg, dans des endroits de circulation encombrée.

On connaît en effet différents dispositifs de manutention pour le transport de charge légère, soit inférieure par exemple à 150 Kg, par une personne seule et sans aide d'énergie autre que celle produite par cette personne. On peut citer les petits chariots en général métalliques de type caddies utilisés dans les supermarchés et, les aéroports ou gares, pour aider les usagers à transporter leurs achats de denrées ou leurs bagages : ces chariots ont alors en général au moins 4 roues, pour assurer leur stabilité, omnidirectionnelles pour faciliter les manoeuvres et s'ils ne demandent pas d'efforts de portage pour le déplacement, il faut porter les objets pour les charger et leur volume est assez encombrant même à vide.

On connaît aussi des brouettes qui sont de "petits véhicules à une roue muni de deux brancards qui servent à transporter les fardeaux à bras d'homme" et qui sont utilisés essentiellement dans les travaux du bâtiment, de terrassement ou de jardinage pour déplacer les matériaux en général en vrac : l'utilisateur supporte alors en traction sur ses bras une grande partie du poids de ce matériau et l'encombrement de l'ensemble nécessite une grande surface libre pour les manoeuvres même si l'appui au sol ne nécessite qu'un étroit passage.

Enfin, on peut citer les "diables" qui sont de petits chariots à deux roues au moins latérales, qui servent à transporter des caisses, des sacs etc... pris à même le sol grâce à une sorte de plateau disposé entre les deux roues et que l'on peut faire reposer à terre et glisser sous la charge en positionnant les bras de transport à la verticale : en basculant alors ces bras en arrière, on fait pivoter assez facilement le "diable" autour de ses roues en profitant de l'effet de bras de levier et la charge décolle du sol, laquelle charge peut alors être déplacée sans trop d'efforts en faisant reposer essentiellement son poids sur les roues. Divers utilisations de ces "diables" ont été développées et divers brevets ont été déposés tels que : le brevet FR N° 76 15406 déposé le 21 Mai 1976 par la Compagnie Industrielle de Montage et décrivant un "Diable pour le déplacement des charges, en particulier de bouteilles de gaz liquéfié", caractérisé essentiellement par deux roues montées sur des supports coulissants le long des branches de transport ; le brevet FR N° 77 01076 déposé le 14 Janvier 1977 par la Société de Fabrication Industrielle de Matériel de Manutention et intitulé "dispositif de manutention de type diable", dont la particularité essentielle est une bavette recourbée à son extrémité et rabattable ; le brevet FR N° 8404632 déposé le 26 Mars 1984 par la Société Française d'Equipements pour la Navigation Aérienne et portant sur un "chariot de type diable pour le transport d'objets tels que valises", caractérisé essentiellement par des glissières dans lesquelles on vient bloquer les saillis de valises ; enfin le brevet FR N° 85 10136 déposé le 03 Juillet 1985 par Monsieur G. DELMARD et intitulé "diable", dont la particularité essentielle est une bavette / plaque-support repliable articulée sur l'arbre supportant les roues.

Tous les dispositifs de manutention, décrits ci-dessus, répondent chacun à un problème spécifique de transport de charge que l'on peut qualifier de légère puisque manoeuvrable par un homme seul, mais aucun n'est vraiment satisfaisant pour le transport de marchandises dans un entrepôt, une réserve, un atelier, une cour... dans lequel se pose des problèmes d'espaces disponibles, et où la circulation est difficile : il est nécessaire alors de disposer d'un chariot dont la maniabilité est maximale.

Le problème posé est de réaliser un dispositif de manutention de petite charge, manoeuvrable par une personne seule, pouvant se déplacer le long de chemins de circulation dont la largeur est à peine supérieure à celle de la petite charge ou dudit dispositif, suivant lequel est le plus large, permettant de faire demi-tour sur ledit chemin en des endroits où la largeur est à peine supérieure à la dimension la plus grande de la projection dans le plan horizontal de l'ensemble du volume occupé par la charge et le dispositif, et d'un encombrement propre le plus réduit possible.

Une solution au problème posé est un dispositif de manutention de type "diable" permettant le transport de charge, par une personne seule et comportant un plateau dit bavette de prise en charge à même le sol, relié à deux branches de transport de hauteur à "mains d'homme" et suivant un angle de 90° à 145° environ, caractérisé en ce que lesdites branches de transport sont reliées à une seule roue médiane porteuse, située en arrière dudit plateau et disposée de telle façon que le plan tangent à la roue et passant par l'extrémité du plateau fait un angle compris entre zéro et quelques degrés avec le plan contenant ledit plateau.

Une autre solution au problème posé est un dispositif suivant le descriptif précédent dans lequel la largeur de la partie inférieure desdites branches de transport et celle dudit plateau sont égales et plus étroites que celle de la partie supérieure entre les autres extrémités de ces branches de transport qui s'écartent de telle façon que la distance entre les poignées est égale à la largeur moyenne des épaules des utilisateurs.

Le résultat est nouveau dispositif de manutention de type "diable" à une roue qui offre de nombreux avantages tant pour sa réalisation que pour son utilisation. En effet, sa fabrication est très simple et peut être assurée par des profils métalliques ou en tout autre matériau résistant standard : dans sa version la plus simple, l'axe de son unique roue constitue la seule partie mécanique du dispositif, ce qui en réduit également le coût.

Sur le plan de son utilisation, la combinaison de son plateau, de son unique roue arrière et des branches de transport lui confèrent une grande facilité de circulation, sans effort pour le déplacement de charges petites ou moyennes, prises à même le sol : il est en effet capable de faire demi-tour sur place même dans un passage étroit une fois la charge soulevée, l'opérateur peut se glisser dans des couloirs encore plus étroits et passer sur des chemins dont seule une faible surface est roulante, il suffit en effet de disposer d'un chemin de roulement à peine plus large que la largeur de l'unique roue.

Son utilité et son utilisation sont très grandes et son faible encombrement, surtout dans une option pliable, est très intéressant pour usage avec des petits véhicules de transport dans lequel il peut être rangé facilement. Dans un mode de réalisation, dans lequel le plateau mesure par exemple 35 cm de large et 35 cm de long avec une roue de 18 cm de diamètre, dont l'axe est fixé 15 cm en arrière dudit plateau, on peut faire tourner le chariot surplace dans un cercle de diamètre 60 cm environ et un opérateur peut manoeuvrer dans un cercle de 80 cm de diamètre.

La description suivante se réfère aux dessins annexés sans aucun caractère limitatif, décrivant un exemple de réalisation d'un dispositif de manutention de charges de type "diable", à une roue, et d'autres réalisations peuvent être envisagées dans le cadre de la présente invention.

La figure 1 est une vue en perspective d'un dispositif de manutention suivant l'invention dans une des versions les plus simples.

La figure 2 est une vue en perspective d'un dispositif avec un système entraînement pour le relevage de la charge.

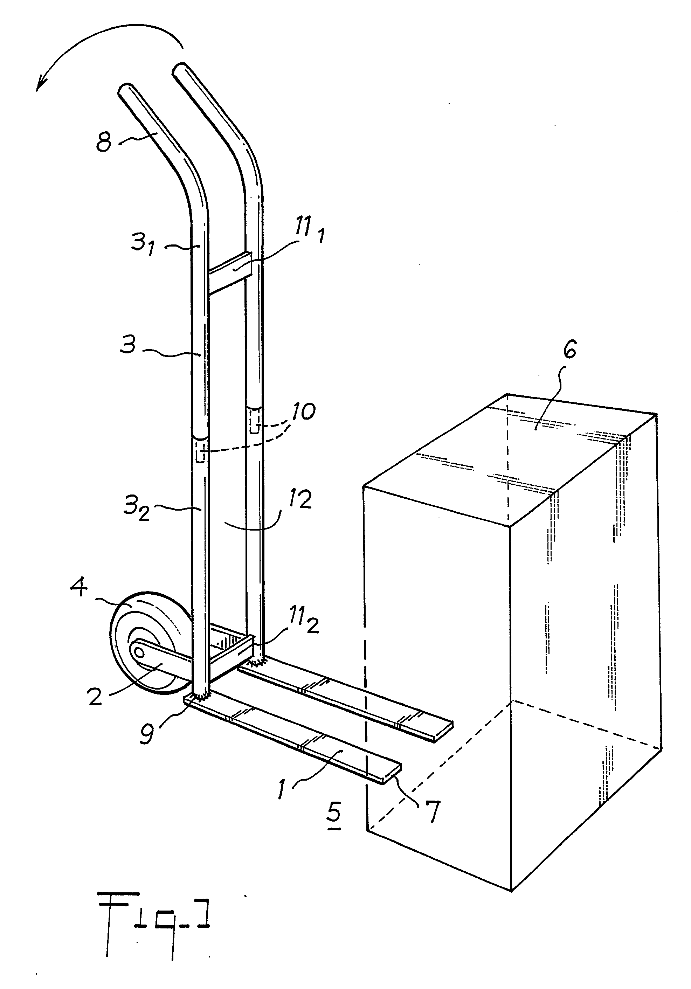

La figure 1 est une vue en perspective d'un dispositif ou chariot de manutention suivant l'invention comportant comme les diables connus à deux roues, un plateau 1 de prise en charge à même le sol 5 sur lequel est posée une charge 6. Ce plateau, dit bavette, peut être glissé sous cette charge car le plan qui le contient est pratiquement parallèle au sol quand on bascule le chariot jusqu'à ce que son arête d'extrémité 7 touche celui-ci.

Ledit plateau bavette 1 peut être de toute forme plane telle que comme représentée ici à titre d'exemple, constitué de deux fourches planes situées dans le prolongement des deux branches de transport 3 sur lesquels on peut appuyer la charge 6 reposant sur ladite bavette quand on bascule le chariot pour le déplacer.

Ce plateau ou bavette 1 peut également avoir comme cela se fait avec d'autres systèmes de manutention, une forme correspondant à celle de la charge à transporter surtout quand celle-ci est normalisée comme par exemple un demi-cercle avec un rebord relevé pour des bouteilles telles que celles de gaz ; on peut adapter aussi cette forme pour des sacs tels que ceux de golf ou pour tout autre container de transport, par exemple celui d'une ménagère.

Pour maintenir ces charges sur ce plateau 1 des sangles de fixation sont montées en option à une hauteur quelconque le long des branches de transport 3 dans des systèmes d'accrochage.

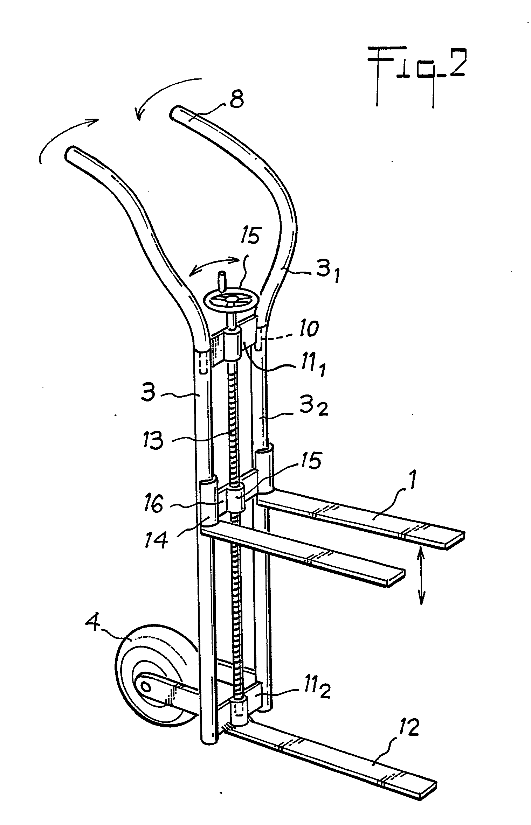

Ces branches de transport sont de longueur correspondant à une hauteur de "mains d'homme", par exemple 1m 20, et sont terminées à leur partie supérieure par des poignée de saisie 8 ; à leur partie inférieure le long de leur extrémité 9 elles sont reliées au plateau 1 suivant un angle de 90° à 145° environ : cette liaison peut être soudée ou vissée, ou être constituée d'une double entretoise tel que décrit dans la figure 2, ou faire partie d'une pièce unique d'un ensemble tel que décrit ci-après. Cette liaison 9 peut également comporter une articulation de type charnière de telle façon que ledit plateau 1 ou bavette est repliable contre lesdites branches de transport 3 pour le stockage et le transport du chariot seul qui occupe ainsi un volume plus réduit : pour cela, les branches de transport 3 peuvent alors être constituées de deux parties enfilées l'une dans l'autre par un emboîtement 10 donc déboitables de telle façon que leur partie supérieure $3_1$ peut être séparée et rabattue par exemple le long de la partie $3_2$.

La particularité principale dudit dispositif de manutention est constitué par son unique roue 4 qui est en arrière du plateau 1 et disposé de telle façon qu'elle soit dans le plan médian des deux branches de transport 3 et du plateau 1 pour équilibrer la charge 6 durant les déplacements, et que le plan tangent à cette roue 4 passant par l'extrémité 7 du plateau ou bavette 1 fait un angle compris entre zéro et quelques degrés dans un sens ou dans l'autre avec le plan contenant ledit plateau : ceci afin de pouvoir glisser aisément celui-ci sous la charge 6 comme décrit précédemment tout en gardant une bonne stabilité nécessaire du fait de la roue unique.

La roue 4 est fixée aux branches de transport 3 par deux supports 2 de toute forme en particulier en "V" ou en "U".

Pour assurer la liaison des branches de transport 3 et constituer un cadre support rigide, celles-ci sont reliées par deux traverses ou entretoises, inférieure $11_2$ et supérieure $11_1$.

L'ensemble des éléments représentant cette entretoise inférieure $11_2$, le plateau ou bavette 1 et les supports 2 de roue peuvent être constitué d'une seule pièce sur laquelle sont rapportées par vissage ou/et emboîtement les branches de transport 3, et la roue 4 fixée sur son axe passant par des orifices prévus dans cette pièce unique.

Cette pièce est réalisée soit en fonderie par coulage dans un moule soit en usinant et/ou en découpant une plaque d'un matériau tel que l'acier ou l'aluminium et d'une épaisseur donnée, puis en la pliant à la forme voulue ; cette pièce a alors l'aspect d'une première marche d'escalier dans laquelle l'appui au sol est constitué par la bavette 1, le montant par l'entretoise $11_2$ et le dessus de la marche par les supports de roue 2.

L'espace 12 entre les branches de transport 3 peut être comblé en option par une plaque de matériau quelconque fixée sur celles-ci ou sur les traverses 11 : cette plaque peut servir de support à tout inscription de type publicitaire.

Dans un mode de réalisation particulier, et à titre d'exemple, la structure du chariot métallique est constituée de profil standard de type tube en fer de diamètre 20 à 22 mm ; les dimensions de la bavette ou plateau 1 sont par exemple de 35 cm de côté, les longueurs des supports de roue 2 de 15 cm et le diamètre de la roue (4) de 18 cm : ceci permet une manoeuvrabilité déjà indiquée dans un cercle de 80 cm de diamètre avec une charge et l'opérateur. La roue 4 porte l'essentiel du poids de ladite charge soulageant au maximum les efforts de l'opérateur et sert en même temps d'axe directionnel.

La figure 2 est une vue perspective d'un dispositif suivant la figure 1 mais avec deux particularités supplémentaires en option telles que :
- les branches de transport 3 sont constituées de deux parties, l'une fixe inférieure $3_2$ et l'autre mobile $3_1$ la deuxième pouvant tourner en rotation par rapport à la première, par exemple grâce à un emboîtement 10 comme dans le cas du dispositif pliable décrit dans la figure 1 avec en plus un moyen quelconque de blocage en position : la partie supérieure mobile $3_1$ est doublement coudée pour permettre de régler l'écartement des extrémités supérieures 8 servant de poignées ; ainsi même si la largeur du plateau 1 et celle des branches $3_2$ sont étroites pour réduire l'encombrement, on peut écarter les poignées 8 à la largeur des épaules de l'opérateur qui peut mieux contrôler alors la stabilité et la direction du chariot, puis les resserrer pour le stockage de celui-ci.
- le plateau ou bavette 1 est supporté par un système d'entraînement à vis sans fin 13 guidé le long des deux branches de transport 3, par exemple par appui de platines courbes 14 contre celles-ci, lequel plateau est relevable par rotation de cette dite vis sans fin par exemple par un volant 15 situé à sa partie supérieure, tournant et retenu dans la traverse supérieure $11_1$. L'autre extrémité de cette vis sans fin est tenue dans la traverse inférieure $11_2$, et le plateau 1 est retenu d'une manière connue par un écrou mobile 15 tournant dans un support 16 solidaire dudit plateau 1 et se déplaçant le long de la vis sans fin 13 par rotation de celle-ci. Cette disposition permet de faciliter le chargement ou le déchargement d'un colis sur le plateau 1 à partir d'une plate-forme qui serait située en hauteur comme la malle d'une voiture ; le transport se faisant de toute façon ensuite avec le plateau redescendu au niveau du sol.

Afin d'éviter un basculement vers l'avant du chariot pendant le relevage du plateau 1 avec la charge, un appui tel qu'une semelle 12 située entre les fourches du plateau 1, et d'une longueur au plus égale à celles-ci, est fixée sur la traverse inférieure $11_2$ : la roue 4 et cette semelle 12 appuyées ensemble sur le sol assurent alors la stabilité longitudinale de l'ensemble l'opérateur n'assurant alors par les poignées 8 que la stabilité latérale.

Dans un mode de réalisation et en option, ledit plateau 1 ou bavette comporte un système de mesure des efforts qu'il supporte du fait de la charge qu'il reçoit et un système de traitement et de transmission de cette mesure pour permettre à l'opérateur de connaître le poids de ladite charge.

La présente invention n'est pas limitée aux modes de réalisation décrit ci-dessus et qui ne constituent que des exemples de fabrication du dispositif suivant l'invention, et des modifications et des variantes peuvent être apportées dans le cadre de celle-ci.

## Revendications

1. Dispositif de manutention de type "diable" permettant le transport de charge (6), par une personne seule et comportant un plateau (1) dit bavette de prise en charge à même le sol (5), relié à deux branches (3) de transport de hauteur à "mains d'homme" et suivant un angle de 90° à 145° environ, caractérisé en ce que lesdites branches (3) de transport sont reliées à une seule roue médiane (4) porteuse, située en arrière dudit plateau (1) et disposée de telle façon que le plan tangent à la roue et passant par l'extrémité (7) du plateau (1) fait un angle compris entre zéro et quelques degrés avec le plan contenant ledit plateau (1).

2. Dispositif de manutention suivant la revendication 1 caractérisé en ce que la largeur de la partie inférieure ($3_2$) desdites branches (3) de transport et celle dudit plateau (1) sont égales et plus étroites que celle de la partie supérieure ($3_1$) entre les autres extrémités de ces branches (3) de transport qui s'écartent de telle façon que la distance entre les poignées (8) est égale à la largeur moyenne des épaules des utilisateurs.

3. Dispositif de manutention selon la revendication 2 caractérisé en ce que l'écartement des extrémités supérieures (8) desdites branches de transport (3) est réglable par rotation d'un emboîtement (10) entre la partie inférieure ($3_2$) et la partie supérieure ($3_1$), laquelle partie supérieure est coudée pour permettre de régler ledit écartement.

4. Dispositif de manutention selon l'une quelconque des revendications 1 à 3 caractérisé en ce que ledit plateau (1) est constitué de deux fourches planes situées chacune dans le prolongement d'une des deux branches (3) de transport.

5. Dispositif de manutention selon l'une quelconque des revendications 1 à 4 caractérisé en ce que ledit plateau (1) a une forme correspondant à celle de la charge (6) à transporter.

6. Dispositif de manutention selon l'une quelconque des revendications 1 à 5 caractérisé en ce que ledit plateau (1) est supporté par un système d'entraînement à vis sans fin (13), guidé le long des deux branches (3) de transport et relevable par rotation de cette dite vis sans fin, un appui (12) solidaire de la traverse inférieure ($11_2$) assurant la stabilité longitudinale.

7. Dispositif de manutention selon l'une quelconque des revendications 1 à 6 caractérisé en ce que l'espace (12) entre les deux branches (3) de transport est comblé par une plaque d'un matériau fixé sur celles-ci.

8. Dispositif de manutention selon l'une quelconque des revendications 1 à 7 caractérisé en ce que ledit plateau (1) comporte un système de mesure des efforts qu'il supporte du fait de la charge (6) qu'il reçoit et un système de traitement et de transmission de cette mesure pour permettre à l'opérateur de connaître le poids de ladite charge.

9. Dispositif de manutention selon l'une quelconque des revendications 1 à 8 caractérisé en ce que ledit plateau (1) est repliable contre lesdites branches (3) de transport et celles-ci sont constituées de deux parties enfilées l'une dans l'autre et

déboîtables de telle façon que ledit dispositif est pliable dans un volume réduit pour son stockage et son transport.

10. Dispositif de manutention selon l'une quelconque des revendications 1 à 8 caractérisé en ce que l'ensemble des éléments représentant l'entretoise inférieure ($11_2$), le plateau (1) et les supports (2) de roue est constitué d'une seule pièce sur laquelle sont rapportées des branches de transport (3) et la roue (4), ladite pièce étant réalisée par coulage, ou découpage et pliage.

Fig.1

Fig.2

**Office européen des brevets**

# RAPPORT DE RECHERCHE EUROPEENNE

Numero de la demande

EP  88 43 0033

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A- 471 386 (JAMES DAVIES) <br> * Figures 1-4; page 2, ligne 50 - page 3, ligne 11 * <br> --- | 1 | B 62 B   1/10 |
| A | US-A-2 384 235 (J.W. BURNETT) <br> * Figures 1-4; page 1, ligne 1 - page 2, ligne 43 * <br> --- | 1 | |
| A | US-A-3 328 046 (J.R. DREW) <br> * Figures 1-10; résumé * <br> --- | 1 | |
| A | US-A-2 636 748 (C.E. GIOVANNONI) <br> * Figures 1-7; colonne 1, ligne 55 - colonne 3, ligne 38 * <br> ----- | 1 | |

**DOMAINES TECHNIQUES RECHERCHES (Int. Cl.5)**

B 62 B

**Le présent rapport a été établi pour toutes les revendications**

| Lieu de la recherche | Date d'achèvement de la recherche | Examinateur |
|---|---|---|
| LA HAYE | 04-08-1989 | VANNESTE M.A.R. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................................
& : membre de la même famille, document correspondant

EPO FORM 1503 03.82 (P0402)